# EUROPEAN PATENT SPECIFICATION

(11) **EP 1 976 809 B1**
(45) Date of publication and mention of the grant of the patent: **01.09.2010**
(21) Application number: 07762964.0
(22) Date of filing: 30.01.2007
(51) Int. Cl.: C04B 41/63, C04B 41/71, E04C 2/06

(54) **COATING SYSTEM FOR CEMENT COMPOSITE ARTICLES**
BESCHICHTUNGSSYSTEM FÜR ZEMENTVERBUNDARTIKEL
SYSTEME DE REVETEMENT POUR ARTICLES COMPOSITES EN CIMENT

(30) Priority: 31.01.2006 US 764242 P
(43) Date of publication of application: 08.10.2008
(73) Proprietor: Valspar Sourcing, Inc., Minneapolis, MN 55415 (US)
(72) Inventor: BRANDENBURGER, Larry, B., Circle Pines, MN 55014 (US); KILLILEA, T., Howard, North Oaks, MN 55127 (US); DECHAINE, Daniel W., Anoka, Minnesota 55303 (US); EVANSON, Kevin, W., Maple Grove, MN 55311 (US)
(74) Representative: Vossius & Partner
(86) International application number: PCT/US2007/002587
(87) International publication number: WO 2007/089807

(56) References cited:
- JP-A- 11 236 281
- US-A- 3 935 364

## Description

This application claims priority from U.S. provisional patent application Serial No. 60/764,242 filed January 31, 2006.

Cement composite articles are becoming more and more common for use in building materials. Many of these articles are prepared from inexpensive materials, such as cement, wood (cellulose) fibers, natural (glass) fibers and polymers. These articles usually are prepared in the form of cement fiberboard substrates such as siding panels and boards. The substrate or articles can be made using methods such as extrusion or using a Hatschek machine.

In northern climates, damage from repeated freezing and thawing of water absorbed into the cement fiberboard substrate represents a significant problem. Continued exposure to moisture, freeze-thaw cycles, UV exposure and atmospheric carbon dioxide can cause physical and chemical changes in articles made from cement fiberboard compositions over time. Coating systems or coating compositions can prevent exposure to the elements such as UV light, carbon dioxide and water, or can help reduce the damage that can occur due to exposure to these elements. Several such systems are available for protecting cement fiberboard articles. However, there is a need for coating systems and coating compositions that provide a superior seal, have the ability to cure rapidly or can provide improved results when an article coated with the composition is submitted to wet adhesion testing and multiple freeze-thaw cycles.

The present invention provides in one aspect a coated article comprising a cement fiberboard substrate and a radiation-curable coating system applied to the substrate, wherein the coating system comprises one or more olefinic compounds and one or more polyvinyl chloride (PVC) dispersion resins. The disclosed coating system may be applied in one or more layers, may be substantially free of volatile solvents or carriers, or may optionally include a photoinitiator system.

In another aspect, the invention provides a method for preparing a coated article, which method comprises providing a cement fiberboard substrate, coating at least a portion of the substrate with the above-described coating system and radiation-curing the coating.

The above summary of the present invention is not intended to describe each disclosed embodiment or every implementation of the present invention. The description that follows more particularly exemplifies illustrative embodiments. In several places throughout the application, guidance is provided through lists of examples, which examples can be used in various combinations. In each instance, the recited list serves only as a representative group and should not be interpreted as an exclusive list.

The details of one or more embodiments of the invention are set forth in the accompanying drawing and the description below. Other features, objects, and advantages of the invention will be apparent from the description and drawings, and from the claims.

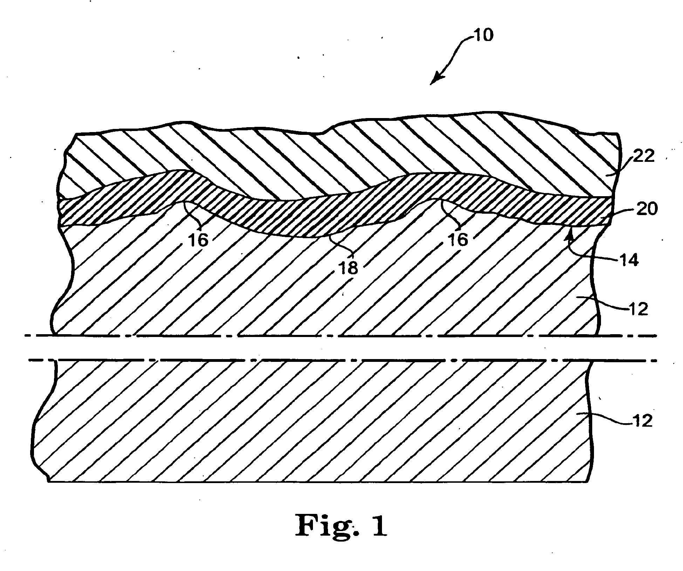

Fig. 1 is a schematic cross-sectional view of a coated fiber cement article.

Like reference symbols in the various figures of the drawing indicate like elements. The elements in the drawing are not to scale.

The terms "a," "an," "the," "at least one," and "one or more" are used interchangeably.

The recitation of numerical ranges by endpoints includes all numbers subsumed within that range (*e.g*., 1 to 5 includes 1, 1.5, 2, 2.75, 3, 3.80, 4, 5, etc.).

The term "comprises" and variations thereof does not have a limiting meaning where such term appears in the description or claims. Thus, for example, a composition comprising a wax compound means that the composition includes one or more wax compounds.

The terms "acrylate esters" and "methacrylate esters" refer to esters of acrylic acid and esters of methacrylic acid, respectively. They may be referred to as (meth)acrylates or (meth)acrylate esters.

The term "olefinic compound" refers to any monomer, oligomer or polymer containing reactive ethylenic unsaturation, such as vinyls, (meth)acrylates, vinyl ethers, allyl ethers, vinyl esters, unsaturated oils (including mono, di and triglycerides), unsaturated fatty acids, and the like. The term "olefinic group" refers to the reactive ethylenic unsaturated functional group in an olefinic compound.

The term "reactive sites" or "reactive groups" refers to a group that can react to form a covalent bond linking or otherwise chemically joining two or more molecules.

The present invention provides a coating system for a cement fiberboard substrate, such as a cement fiberboard siding product or other cement composite article. The coating system is a radiation-curable coating system applied to the substrate, wherein the coating system includes one or more olefinic compounds and one or more PVC dispersion resins. The disclosed coating system includes one or more coating compositions that may be applied in one or more layers.

Referring to **Fig. 1****,** a coated article **10** of the present invention is shown in schematic cross-sectional view. Article **10** includes a cement fiberboard substrate **12.** Substrate **12** typically is quite heavy and may for example have a density of 1 to 1.6 g/cm³ or more. The first major surface **14** of substrate **12** may be embossed with small peaks or ridges **16** and valleys **18,** e.g., so as to resemble roughsawn wood. Major surface **14** may have a variety of other surface configurations, and may resemble a variety of building materials other than roughsawn wood. Layer or layers **20** of the disclosed coating system lie atop and partially penetrate surface **14,** and desirably are applied to article **10** at the location where article **10** is manufactured. Layers **20** help to protect substrate **12** against one or more of exposure to moisture, freeze-thaw cycles, UV exposure or atmospheric carbon dioxide. Layers **20** also may provide a firmly-adhered base layer upon which one or more firmly-adhered layers of final topcoat **22** may be formed. Final topcoat **22** desirably is both decorative and weather-resistant, and may be applied to article **10** at the location where article **10** is manufactured or after article **10** has been attached to a building or other surface.

The disclosed articles may be coated on one or more surfaces with the disclosed radiation-curable coating system. The coating system includes one or more coating compositions that may be applied in one or more layers. The coating systems may be provided in a variety of embodiments. In one exemplary embodiment, the coating system includes a first coating composition that includes at least one olefinic compound, and a second coating composition that includes at least one PVC dispersion resin. The two coating compositions may be applied to the substrate sequentially or concurrently and sequentially or simultaneously cured using radiation. In another exemplary embodiment the coating system includes at least one olefinic compound and at least one PVC dispersion resin, and may be applied to the substrate and cured using radiation. The disclosed coating systems have particular utility for coating the bottom surface of a cement fiberboard article while it is being transported on a conveying system (*e.g*., on belts, rollers, air tables or the like), as described in applicants' copending PCT Application WO 2007/090132 filed even date herewith and entitled METHOD FOR COATING A CEMENT FIBERBOARD ARTICLE.

The olefinic compound in the disclosed coating systems appears to function as a reactive penetrant. This may be better appreciated by observing the coating system after it is applied to the substrate but before radiation curing is performed. The olefinic compound appears to improve wetting or penetration, and may help draw other components in the coating system into pores in the substrate. The olefinic compound also appears to help the cured coating adhere to the substrate following cure. The PVC dispersion resin appears to limit wetting or penetration, and may help prevent other components in the coating system from penetrating so deeply into pores in the substrate that they can not be sufficiently radiation cured. The PVC dispersion resin also appears to help subsequently applied coatings (e.g., a topcoat) adhere to the coated substrate.

Preferred coating systems may also include one or more of the following additional features:
- increasing the resistance of the article to water uptake (into the article);
- increasing the surface integrity of the article (*e.g*., by acting to reinforce the fiber and cement matrix much like binder in other composite materials);
- protecting against expansion of the article under freeze/thaw conditions; or
- increasing the integrity of the edges of the article by binding the fiber layers together.

A variety of cement fiberboard substrates may be employed in the disclosed articles. The disclosed substrates typically include cement and a filler. Exemplary fillers include wood, fiberglass, polymers or mixtures thereof. The substrates can be made using methods such as, extrusion, the Hatschek method, or other methods known in the art. See, *e.g.,* U.S. Patent Application No. 2005/0208285 A1 (corresponds to International Patent Application No. WO 2005/071179 A1); Australian Patent Application No. 2005100347; International Patent Application No. WO 01/68547 A1; International Patent Application No. WO 98/45222 A1; U.S. Patent Application No. 2006/0288909 A1; and Australian Patent Application No. 198060655 A1. Non-limiting examples of such substrates include siding products, boards and the like, for uses including fencing, roofing, flooring, wall boards, shower boards, lap siding, vertical siding, soffit panels, trim boards, shaped edge shingle replicas and stone or stucco replicas. One or both major surfaces of the substrate may be profiled or embossed to look like a grained or roughsawn wood or other building product, or scalloped or cut to resemble shingles. The uncoated substrate surface typically contains a plurality of pores with micron- or submicron-scale cross-sectional dimensions.

A variety of suitable fiber cement substrates are commercially available. For example, several preferred fiber cement siding products are available from James Hardie Building Products Inc. of Mission Viejo, CA, including those sold as HARDIEHOME™ siding, HARDIPANEL™ vertical siding, HARDIPLANK™ lap siding, HARDIESOFFIT™ panels, HARDITRIM™ planks and HARDISHINGLE™ siding. These products are available with an extended warranty, and are said to resist moisture damage, to require only low maintenance, to not crack, rot or delaminate, to resist damage from extended exposure to humidity, rain, snow, salt air and termites, to be non-combustible, and to offer the warmth of wood and the durability of fiber cement. Other suitable fiber cement siding substrates include AQUAPANEL™ cement board products from Knauf USG Systems GmbH & Co. KG of Iserlohn, Germany, CEMPLANK™, CEMPANEL™ and CEMTRIM™ cement board products from Cemplank of Mission Viejo, CA; WEATHERBOARDS™ cement board products from CertainTeed Corporation of Valley Forge, PA; MAXITILE™, MAXISHAKE™ AND MAXISLATE™ cement board products from MaxiTile Inc. of Carson, CA; BRESTONE™, CINDERSTONE™, LEDGESTONE™, NEWPORT BRICK™, SIERRA PREMIUM™ and VINTAGE BRICK™ cement board products from Nichiha U.S.A., Inc. of Norcross, GA, EVERNICE™ cement board products from Zhangjiagang Evernice Building Materials Co., Ltd. of China and E BOARD™ cement board products from Everest Industries Ltd. of India.

A variety of olefinic compounds may be used in the disclosed coating systems. The olefinic compounds are distinct from the PVC dispersion resins, and are carbon containing compounds having at least one site of unsaturation which can react, optionally in the presence of an initiator, to provide polymeric or crosslinked products. Non-limiting examples of olefinic compounds include monomers such as (meth)acrylates, vinyls, vinyl ethers, allyl ethers, vinyl esters, unsaturated oils (including mono-, di- and tri-glycerides), unsaturated fatty acids, and the like or mixtures thereof. The olefinic compounds also include oligomers or polymers having at least one site of unsaturation which can react, optionally in the presence of an initiator, to provide polymeric or crosslinked products.

Exemplary olefinic monomers include (meth)acrylate esters of unsubstituted or substituted C₁-C₁₅ alcohols such as tripropylene glycol, isobornyl alcohol, isodecyl alcohol, phenoxyethyl alcohol, trishydroxyethyl isocyanurate, trimethylolpropane ethoxylate (TMPTA), ditrimethylolpropane ethoxylate (diTMPTA), hexanediol, ethoxylated neopentyl glycol, propoxylated neopentyl glycol, ethoxylated phenol, polyethylene glycol, bisphenol A ethoxylate, trimethylolpropane, propoxylated glycerol, pentaerythritol, tetrahydrofurfuryl alcohol, β-carboxyethyl alcohol, or combination thereof. For example, the olefinic monomer may be isobornyl (meth)acrylate, isodecyl (meth)acrylate, phenoxyethyl (meth)acrylate, trimethylolpropane tri(meth)acrylate, alkoxylated cyclohexane dimethanol di(meth)acrylate, trimethylolpropane ethoxylate tri(meth)acrylate, dipropylene glycol di(meth)acrylate, tripropylene glycol di(meth)acrylate, hexanediol di(meth)acrylate, tetrahydrofurfuryl (meth)acrylate, pentaerythritol tri(meth)acrylate, pentaerythritol tetra(meth)acrylate, di-(trimethyolpropane tetra(meth)acrylate), propoxylated glycerol tri(meth)acrylate, beta-carboxyethyl (meth)acrylate, bisphenol A ethoxylate di(meth)acrylate, ethoxylated neopentyl glycol di(meth)acrylate, propoxylated neopentyl glycol di(meth)acrylate, di-(trimethyolpropane tetra (meth)acrylate) or combination thereof. Preferred olefinic monomers include trimethylolpropane tri(meth)acrylate, bisphenol A ethoxylate di(meth)acrylate, propoxylated glycerol tri(meth)acrylate, trimethylolpropane ethoxylate tri(meth)acrylate, di-(trimethyolpropane tetra(meth)acrylate), or combination thereof. The olefinic monomer may contain a (C₁-C₁₅) alcohol radical such as hydroxymethyl, 1-hydroxyethyl, 2-hydroxyethyl, 1-hydroxypropyl, 2-hydroxypropyl, 3-hydroxypropyl, 1-hydroxybutyl, 4-hydroxybutyl, 1-hydroxypentyl, 5-hydroxypentyl, 1-hydroxyhexyl, 6-hydroxyhexyl, 1,6-dihydroxyhexyl, 1,4-dihydroxybutyl, and the like.

Exemplary allyl ether monomers contain one or more allyl ether groups which typically are bonded to a core structural group which can be based on a wide variety of polyhydric alcohols. Non-limiting examples of suitable polyhydric alcohols include neopentyl glycol, trimethylolpropane, ethylene glycol, propylene glycol, butylene glycol, diethylene glycol, trimethylene glycol, triethylene glycol, trimethylolethane, pentaerythritol, glycerol, diglycerol, 1,4-butanediol, 1,6-hexanediol, 1,4-cyclohexanedimethanol, and any of the other polyols mentioned above in connection with the (meth)acrylate esters. Other exemplary allyl ether monomers include hydroxyethyl allyl ether, hydroxypropyl allyl ether, trimethylolpropane monoallyl ether, trimethylolpropane diallyl ether, trimethylolethane monoallyl ether, trimethylolethane diallyl ether, glycerol monoallyl ether, glycerol diallyl ether, pentaerythritol monoallyl ether, pentaerythritol diallyl ether, pentaerythritol, triallyl ether, 1,2,6-hexanetriol monoallyl ether, 1,2,6-hexanetriol diallyl ether, and the like. Preferred allyl ethers include poly propoxylated and ethoxylated forms of allyl ethers.

Exemplary vinyl ether monomers contain one or more vinyl ether groups and include 4-hydroxybutyl vinyl ether, 1,4-cyclohexanedimethanol monovinyl ether, 1,4-cyclohexanedimethanol divinyl ether, ethylene glycol monovinyl ether, ethylene glycol divinyl ether, diethylene glycol monovinyl ether, diethylene glycol divinyl ether, triethylene glycol divinyl ether, and the like. Preferred vinyl ether monomers include propoxylated or ethoxylated forms of vinyl ether monomers.

The olefinic compounds can include latex polymers or polyurethane dispersions having attached olefinic groups. These compounds can be prepared as described in applicants' copending PCT Application No. WO 2007/090131 filed even date herewith and entitled COATING SYSTEM FOR CEMENT COMPOSITE ARTICLES.

A subset of the previously mentioned olefinic compounds (*e.g*., hexanediol di(meth)acrylate, trimethylolpropane tri(meth)acrylate and di-trimethyolpropane tetra(meth)acrylate) have multiple (*e.g*., two or more) reactive groups. These monomers or oligomers can function as crosslinking agents.

The disclosed coating systems or coating compositions preferably contain 20 to 95 % by weight of olefinic compounds based on the total weight of the non-volatile components in the coating system, preferably 30 to 90 % by weight and most preferably 50 to 80 % by weight.

A variety of PVC dispersion resins may be used in the disclosed coating systems and method. A PVC dispersion resin typically contains resin particles (or a mixture of particles of various resins or missed resins) in a liquid plasticizer. The PVC dispersion resin may for example include a PVC homopolymer, copolymer or a combination thereof, and various additives. PVC dispersion resins can be made by emulsion polymerization, micro-suspension polymerization or by a process borrowing from both techniques. PVC dispersion resins typically have very fine particles (e.g., an average particle diameter of 0.1 µm to 1.5 µm). Typically, the PVC dispersion resin particles show little or no porosity and have very high surface area. When sufficient plasticizer is added to a dispersion resin (*e.g*., 40 phr or higher) a liquid suspension which may be called a plastisol or organosol is obtained. Copolymers of vinyl chloride and other monomers such as acetates and acrylates can be used to produce dispersion resins. PVC dispersion resins are typically produced by suspension polymerization and have an average particle size range of 25µm to 75µm. Exemplary commercially available PVC dispersion resins include GEON™ resins (e.g., GEON 137, 171, and 172) from PolyOne Corporation, Avon Lake, OH and NORVINYL™ resins (e.g., NORVINYL S6261, S6571, S7060 and S8060) from Hydro Polymers, Oslo, Norway.

The disclosed coating systems or coating compositions preferably contain 5 to 80 % by weight PVC dispersion resin based on the total weight of the non-volatile components in the coating system, more preferably 10 to 70 % by weight and most preferably 20% to 50 % by weight.

The disclosed coating systems may include one or more optional silicates (e.g., a silicate salt). Exemplary silicates include lithium silicate, potassium silicate, sodium silicate, ammonium silicate and the like. The amount of silicate may for example be from 2 to 50 % by weight, from 5 to 40 % by weight or from 10 to 35 % by weight, based on the total weight of the non-volatile components. Silicates are available through a variety of chemical suppliers, for example potassium silicate is available from The PQ Corporation, Valley Forge, PA.

Wet adhesion testing and "freeze-thaw" cycles have been shown, under laboratory conditions, to simulate long-term outdoor exposure encountered in northern climates. A Wet Adhesion Test may be carried out as follows to evaluate adhesion of the coating system after a coated cement fiberboard substrate has been saturated with water. According to this test procedure, coated substrates (*e.g*., fiber cement boards) are soaked in room temperature water for 24 hours. After soaking, the boards are removed from the water and kept at room temperature for 24 hours. A six-inch (15.24 cm) length of 3M HD 250 tape is applied to the surface of the board with the long axis of the tape in the direction of any embossing patterns that may be present. The tape is firmly pressed onto the board ensuring full contact. The tape is then removed by quickly pulling it off at a 90-degree angle to the board. "Wet Adhesion" performance is rated based on the percent of coating removed from the cement board. Performance is further assessed by noting where any failure occurs. For example, failure may occur between interfacial coating layers, between the coating and the surface of the board, or within the board itself. Preferred coating systems or coating compositions typically have less than 25% coating removal, more preferably less than 15% coating removal. In addition, the failure preferably is within the board as indicated by a significant amount of fiber from the board adhering to the removed coating.

Preferred coated articles can withstand at least 30 freeze-thaw cycles, when tested according to ASTM D6944-03, Test Method A. As written, this ASTM test method recites a 30-cycle sequence. However, rather than simply grade a specimen as a "pass" at the end of 30 cycles, the test desirably is lengthened to include additional cycles. More preferably, the coated articles can withstand at least 75 freeze-thaw cycles, most preferably at least 125 freeze-thaw cycles and optimally at least 175 freeze-thaw cycles.

The disclosed coating systems or coating compositions preferably have improved, viz., lower, volatile organic content (VOC). The coating systems or coating compositions desirably have a VOC of less than 5 %, based on the total weight of the coating system, preferably a VOC of less than 2 %, more preferably a VOC of less than 0.5 %.

The olefinic compounds are curable by radiation, e.g., visible light, ultra violet light, electron beam, microwave, gamma radiation, infrared radiation and the like. An initiator system is not required for electron beam curing but for other radiation sources typically will be chosen based on the particular type of curing energy (e.g., UV, visible light or other energy) and cationic, free-radical, cationic or other curing mechanism) employed. Thus in one preferred embodiment, the coating system is electron beam curable and does not require an initiator. In another preferred embodiment, the coating system is UV curable and free-radically polymerizable, and includes a UV photoinitiator system which generates free radicals in response to UV light and thereby cures the coating.

Non-limiting examples of initiators include peroxide compounds, azo compounds, cationic-generating initiators, cleavage-type initiators, hydrogen abstraction-type initiators, and the like. Exemplary peroxide compounds include t-butyl perbenzoate, t-amyl perbenzoate, cumene hydroperoxide, t-amyl peroctoate, methyl ethyl ketone peroxide, benzoyl peroxide, cyclohexanone peroxide, 2,4-pentanedione peroxide, di-t-butyl peroxide, t-butyl hydroperoxide and di-(2-ethylhexyl)-peroxydicarbonate. Preferably, the curing agent is t-butyl perbenzoate, methyl ethyl ketone peroxide, or cumene hydroperoxide. Methyl ethyl ketone peroxide conveniently is employed as a solution in dimethyl phthalate, e.g., LUPERSOL™ DDM-9 from Ato-Chem.

Exemplary azo compounds include 2,2-azo bis-(2,4-dimethylpentanenitrile), 2,2-azo bis-(2-methylbutanenitrile) and 2,2-azo bis-(2-methylpropanenitrile).

Exemplary cationic-generating photoinitiators include super acid-generating photoinitiators such as triaryliodonium salts, triarylsulfonium salts and the like. A preferred triarylsulfonium salt is triphenyl sulfonium hexafluorophosphate.

Exemplary cleavage-type photoinitiators include α,α-diethoxyacetophenone (DEAP); dimethoxyphenylacetophenone (IRGACURE™ 651); hydroxycyclo-hexylphenylketone (IRGACURE™ 184); 2-hydroxy-2-methyl-1-phenylpropan-1-one (DAROCUR™ 1173); a 25:75 blend of bis-(2,6-dimethoxybenzoyl)-2,4,4-trimethylpentyl phosphine oxide and 2-hydroxy-2-methyl-1-phenylpropan-1-one (IRGACURE™ 1700), a 50:50 blend of hydroxycyclo-hexylphenylketone and benzophenone (IRGACURE™ 500), 50:50 blend of 2,4,6-trimethylbenzoyl-diphenyl-phosphineoxide and 2-hydroxy-2-methyl-1-phenyl-propan-1-one (DAROCUR™ 4265), bis acryl phosphine (IRGACURE™ 819) and phosphine oxide (IRGACURE™ 2100), all available from Ciba Corporation, Ardsley, N.Y. Other cleavage-type initiators include 2,4,6-trimethylbenzoyl-diphenylphosphine oxide (LUCIRIN™ TPO) from BASF Corporation and a 70:30 blend of *oligo 2-*hydroxy-2-methyl-[4-(1-methylvinyl)phenyl]propan-1-one and 2-hydroxy-2-methyl-1-phenylpropan-1-one (KIP™ 100) available from Sartomer (Exton, Pa.). Preferred cleavage-type photoinitiators are hydroxycyclo-hexylphenylketone, 2-hydroxy-2-methyl-1-phenylpropan-1-one, benzophenone, 2,4,6-trimethylbenzoyl-diphenylphosphine oxide bis acryl phosphine and a 70:30 blend of 2-hydroxy-2-methyl-[4-(1-methylvinyl)phenyl]propan-1-one and 2-hydroxy-2-methyl-1-phenylpropan-1-one.

Non-limiting examples of hydrogen abstraction-type photoinitiators include benzophenone, substituted benzophenones (*e.g*., ESCACURE™ TZT of Fratelli-Lamberti) and other diaryl ketones such as xanthones, thioxanthones, Michler's ketone, benzil, quinones and substituted derivatives of all of the above. Camphorquinone is an example of a compound that may be used when one desires to cure a coating system with visible light.

For coating compositions or systems having an olefinic compound including a mixture of two or more of a (meth)acrylate, an allyl ether and a vinyl ether functional group, a combination of curing procedures can be used. For example, a coating composition having a (meth)acrylate and a vinyl ether functional group typically may include an a-cleavage-type or hydrogen abstraction type photoinitiator for polymerization of the (meth)acrylate groups and a cationic-generating photoinitiator for polymerization of the vinyl ether groups.

If desired, the coating composition or system may also include a co-initiator or photoinitiator synergist. Non-limiting examples of co-initiators include (1) tertiary aliphatic amines such as methyl diethanol amine and triethanol amine; (2) aromatic amines such as amylparadimethylaminobenzoate, 2-n-butoxyethyl-4-(dimethylamino) benzoate, 2-(dimethylamino)ethylbenzoate, ethyl-4-(dimethylamino)benzoate and 2-ethylhexyl-4-(dimethylamino)benzoate; (3) (meth)acrylated amines such as EBECRYL™ 7100 and UVECRYL™ P104 and P115, all from UCB RadCure Specialties; and (4) amino-functional acrylate or methacrylate resin or oligomer blends such as EBECRYL™ 3600 or EBECRYL™ 3703, both from UCB RadCure Specialties. Combinations of the above four categories of co-initiators may also be used.

In the case of visible or UV radiation curing systems, the preferred amount of photoinitiator present in the disclosed coating systems can be from 0.2 to 15 wt. % of the non-volatile components. More preferably the photoinitiator can be from 0.5 to 10 wt. %, and most preferably the photoinitiator can be from 0.75 to 5 wt. % of the non-volatile components.

Other methods for curing the coating systems can be used in combination with methods described herein Such other curing methods include heat cure, chemical cure, anaerobic cure, moisture cure, oxidative cure, and the like. Such methods may require inclusion of a corresponding curing initiator or curing agent in the composition. For example, heat cure can be induced by peroxides, metal curing packages can induce an oxidative cure, or multifunctional amines (for example isophorone diamine) can effect a chemical crosslinking cure through Michael addition of amine groups onto acrylate reactive unsaturated groups. If these additional initiators are present in the coating system they typically make up 0.1-12% by weight of the curable coating system. Means for effecting cures by such methods are known to those of skill in the art or can be determined using standard methods.

Other optional components for use in the coating systems herein are described in Koleske et al., Paint and Coatings Industry, April, 2003, pages 12-86. Typical performance enhancing additives that may be employed include surface active agents, pigments, colorants, dyes, surfactants, dispersants, defoamers, thickeners, heat stabilizers, leveling agents, coalescents, biocides, mildewcides, anti-cratering agents, curing indicators, plasticizers, fillers, sedimentation inhibitors, ultraviolet light absorbers, optical brighteners, and the like to modify properties.

The coating systems may also contain an optional coalescent and many coalescents are known in the art. The optional coalescent is preferably a low VOC coalescent such as is described in U.S. Pat. No. 6,762,230.

The invention is summarized by the following items :
1. A coated article comprising:
   a cement fiberboard substrate; and
   a radiation-curable coating system applied to the substrate,
   wherein the coating system comprises:
   one or more olefinic compounds; and
   one or more polyvinyl chloride (PVC) dispersion resins.
2. The article of item 1, wherein the coating system includes two or more coating compositions that may be applied in two or more layers.
3. The article of any preceding item, wherein the coating system further comprises an initiator system.
4. The article of item 3, wherein the coating system comprises a UV photoinitiator.
5. The article of any preceding item, wherein the coating system comprises a first composition comprising an olefinic compound and a second composition comprising a PVC dispersion resin.
6. The article of any preceding item, wherein the coating system comprises a composition comprising both an olefinic compound and a PVC dispersion resin.
7. The article of any preceding item, wherein the coating system is substantially free of volatile solvents or carriers.
8. The article of any preceding item, wherein the olefinic compound comprises a (meth)acrylate, vinyl, vinyl ether, allyl ether, vinyl ester, unsaturated oil, unsaturated fatty acid, or combination thereof.
9. The article of item 8, wherein the olefinic compound comprises isobornyl (meth)acrylate, isodecyl (meth)acrylate, phenoxyethyl (meth)acrylate, trimethylolpropane tii(meth)acrylate, alkoxylated cyclohexane dimethanol (meth)acrylate, trimethylolpropane ethoxylate tri(meth)acrylate, dipropylene glycol di(meth)acrylate, tripropylene glycol di(meth)acrylate, hexanediol di(meth)acrylate, tetrahydrofurfuryl (meth)acrylate, pentaerythritol tri(meth)acrylate, pentaerythritol tetra(meth)acrylate, di-(trimethyolpropane tetra(meth)acrylate), propoxylated glycerol tri(meth)acrylate, beta-carboxyethyl (meth)acrylate, bisphenol A ethoxylate di(meth)acrylate, ethoxylated neopentyl glycol di(meth)acrylate, propoxylated neopentyl glycol di(meth)acrylate, di-(trimethyolpropane tetra (meth)acrylate) or combination thereof.
10. The article of item 9, wherein the olefinic compound comprises trimethylolpropane tri(meth)acrylate, bisphenol A ethoxylate di(meth)acrylate, propoxylated glycerol tri(meth)acrylate, trimethylolpropane ethoxylate tri(meth)acrylate, di-(trimethyolpropane tetra(meth)acrylate), or combination thereof.
11. The article of any preceding item, wherein the olefinic compound comprises a monomer.
12. The article of any of items 1 to 8, wherein the olefinic compound comprises an oligomer.
13. The article of any preceding item wherein the PVC dispersion resin comprises resin particles in a liquid plasticizer.
14. The article of item 13, wherein the particles have an average particle diameter of 0.1 µm to 1.5 µm.
15. The article of any preceding item, wherein a latex-containing primer or latex-containing topcoat is applied over the coating system.
16. The article of any preceding item, wherein the cement fiberboard substrate is in the form of a siding product
17. The article of any preceding item, wherein the coated article when radiation cured can withstand at least 30 freeze-thaw cycles.
18. The article of item 17, wherein the coated article can withstand at least 75 freeze-thaw cycles.
19. The article of item 18, wherein the coated article can withstand at least 175 freeze-thaw cycles.
20. The article of any preceding item, wherein the coating system has a VOC of less than 5 % based on the total weight of the coating system.
21. The article of item 20, wherein the coating system has a VOC of less than 2 % based on the total weight of the coating system.
22. The article of item 22, wherein the coating system has a VOC of less than 0.5 % based on the total weight of the coating system.

Exemplary coating systems that can be used in the coating systems are listed below. This is not intended to be an exhaustive list of examples of coating systems. The examples include the following compositions:
- A: One or more olefinic compounds (*e.g*., monomers, oligomers, or polymers) and one or more PVC dispersion resins; and
- B: One or more olefinic compounds (*e.g*., monomers, oligomers, or polymers), one or more PVC dispersion resins and an initiator.

Composition A - An example of a coating system suitable for use in the invention includes a mixture of (i) olefinic monomers or oligomers, (*e.g*., trimethylolpropane triacrylale (TMPTA) (available from Sartomer) and (ii) a PVC dispersion (e.g., GEON 137, 171 or 172 from PolyOne Corporation or NORVINYL S6261, S6571, S7060 or S8060 from Hydro Polymers).

Composition B -- An example of a coating system suitable for use in the invention includes a mixture of (i) olefinic monomers or oligomers, (*e.g*., trimethylolpropane tri-acrylate (TMPTA); (ii) a PVC dispersion (e.g., GEON 137, 171 or 172 from PolyOne Corporation or NORVINYL S6261, S6571, S7060 or S8060 from Hydro Polymers); and (iii) an initiator, (*e.g*., DAROCURE 1173 (D-1173).

The instant method includes applications of suitable coating systems which can be applied as a single layer or as multiple applications of at least one coating composition. The specific application and order of application of the selected coating compositions can be readily determined by a person skilled in the art of preparing or applying such compositions. Exemplary descriptions of these coating systems are provided below.

Specific application routes for preparing the coated articles include:
- Apply a coating system, and subject the coating system to radiation cure (e.g., electron-beam or UV cure); and
- Apply a coating composition, apply one or more additional coating composition(s), and subject the resulting coating system to radiation cure (e.g., electron-beam or UV cure).

Accordingly, the disclosed articles can be prepared by applying the coating system as a single layer or the coating system can be applied as multiple layers. Coating compositions applied using multiple coating layers may allow mixing of the coating layers at an interface.

In any of the above application routes when there is a carrier (*e.g*., water or solvent) present in one of more of the compositions, the coated article may be subjected to quick drying to remove at least a portion of any carrier which may be present. The coating composition(s) are preferably applied at 75 to 100 % solids by weight and preferably at 85 to 100 % solids.

The coating systems may be applied by any number of application techniques including but not limited to brushing (e.g., using a brush coater), direct roll coating, reverse roll coating, flood coating, dip coating, vacuum coating, curtain coating and spraying. The various techniques each offer a unique set of advantages and disadvantages depending upon the substrate profile, morphology and tolerable application efficiencies. The disclosed coating systems can for example advantageously be applied to a cement fiberboard substrate by roll coating or spraying. Lower viscosities facilitate uniform film control. The applied film thickness may be controlled by varying the application rate.

A dry film thickness (DFT) of the coating system on the cement fiberboard substrate may for example be in the range of, but not limited to, 0.2 to 4 mil (0.005 to 0.1 mm), more preferably 0.3 to 3 mil (0.008 to 0.08 mm).

It is preferred that the coated articles are coated on at least one major surface with the coating system. More preferably, the coated articles are coated on a major surface and up to four minor surfaces including any edges. Most preferably, the coated articles are coated on all (e.g., both) major surfaces, and up to four minor surfaces including any edges.

Multiple layers of the disclosed coating systems may be applied. A primer (e.g., a latex-containing primer) or topcoat (e.g., a latex-containing topcoat) or both a primer and topcoat may be applied directly to the coating system. If desired this may be done at the site where the cement fiberboard substrate is manufactured.

The coating systems and compositions described herein may be used in place of or in addition to coatings that the prior art has categorized as "sealers," "primers" and "topcoats." However, the systems and compositions may not fit neatly into any category *per se* and such terms should not be limiting.

It is also noted that the disclosed coating systems and coating compositions can be used with other coating compositions such as those disclosed in the following applications. WO 2007/090131, WO 2007/089913 and WO 2007/090132 (U.S. Application Serial Nos. 60/764,103, 60/764,044 and 60/674,131, each filed January 31, 2006, and 60/802,185, filed May 19, 2006).

The invention has been described with reference to various specific and preferred embodiments and techniques. However, it should be understood that many variations and modifications may be made while remaining within the scope of the invention as defined in the claims.

## Claims

1. A coated article comprising:
a cement fiberboard substrate; and
a radiation-curable coating system applied to the substrate,
wherein the coating system comprises:
one or more olefinic compounds; and
one or more.polyvinyl chloride (PVC) dispersion resins.

2. The article of claim 1, wherein the coating system includes two or more coating compositions that may be applied in two or more layers.

3. The article of any preceding claim, wherein the coating system further comprises an initiator system.

4. The article of claim 3, wherein the coating system comprises a UV photoinitiator.

5. The article of any preceding claim, wherein the coating system comprises a first composition comprising an olefinic compound and a second composition comprising a PVC dispersion resin.

6. The article of any preceding claim, wherein the coating system comprises a composition comprising both an olefinic compound and a PVC dispersion resin.

7. The article of any preceding claim, wherein the olefinic compound comprises a (meth)acrylate, vinyl, vinyl ether, allyl ether, vinyl ester, unsaturated oil, unsaturated fatty acid, or combination thereof.

8. The article of any preceding claim, wherein the olefinic compound comprises trimethylolpropane tri(meth)acrylate, bisphenol A ethoxylate di(meth)acrylate, propoxylated glycerol tri(meth)acrylate, trimethylolpropane ethoxylated tri(meth)acrylate, di-(trimethyolpropane tetra(meth)acrylate), or combination thereof.

9. The article of any preceding claim, wherein the olefinic compound comprises a monomer.

10. The article of any of any preceding claim, wherein the olefinic compound comprises an oligomer.

11. The article of any preceding claim, wherein the PVC dispersion resin comprises resin particles in a liquid plasticizer, and wherein the particles have an average particle diameter of 0.1 µm to 1.5 µm.

12. The article of any preceding claim, wherein a latex-containing primer or latex-containing topcoat is applied over the coating system, and wherein the cement fiberboard substrate is in the form of a siding product.

13. The article of any preceding claim, wherein the coated article when radiation cured can withstand at least 30 freeze-thaw cycles, when tested according to ASTM D 6944-03, Test Method A.

14. The article of claim 13, wherein the coated article can withstand at least 175 freeze-thaw cycles.

15. The article of any preceding claim, wherein the coating system has a VOC of less than 5 % based on the total weight of the coating system.

16. The article of claim 15, wherein the coating system has a VOC of less than 0.5 % based on the total weight of the coating system.

17. A method for making a coated article, which method comprises:
providing a cement fiberboard substrate;
coating at least a portion of the substrate with a radiation-curable coating system comprising one or more olefinic compounds, and one or more polyvinyl chloride (PVC) dispersion resins; and
radiation-curing the coating.

18. The method of claim 17, comprising coating the substrate with a first coating composition comprising the one or more olefinic compounds followed by a second coating composition comprising one or more polyvinyl chloride (PVC) dispersion resins.

## Patentansprüche

1. Ein beschichteter Gegenstand, umfassend:
ein Zement-Faserplatten-Substrat; und
ein auf das Substrat aufgebrachtes strahlungshärtbares Beschichtungssystem, wobei das Beschichtungssystem umfasst:
eine oder mehrere olefinische Verbindungen; und
ein oder mehrere Polyvinylchlorid(PVC)-Dispersionsharze.

2. Der Gegenstand nach Anspruch 1, wobei das Beschichtungssystem zwei oder mehr Beschichtungszusammensetzungen beinhaltet, die in zwei oder mehr Schichten aufgebracht werden können.

3. Der Gegenstand nach einem vorhergehenden Anspruch, wobei das Beschichtungssystem ferner ein Initiatorsystem umfasst.

4. Der Gegenstand nach Anspruch 3, wobei das Beschichtungssystem einen UV-Photoinitiator umfasst.

5. Der Gegenstand nach einem vorhergehenden Anspruch, wobei das Beschichtungssystem eine erste Zusammensetzung, die eine olefinische Verbindung umfasst, und eine zweite Zusammensetzung, die ein PVC-Dispersionsharz umfasst, umfasst.

6. Der Gegenstand nach einem vorhergehenden Anspruch, wobei das Beschichtungssystem eine Zusammensetzung umfasst, die sowohl eine olefinische Verbindung als auch ein PVC-Dispersionsharz umfasst.

7. Der Gegenstand nach einem vorhergehenden Anspruch, wobei die olefinische Verbindung ein (Meth)acrylat, Vinyl, Vinylether, Allylether, Vinylester, ungesättigtes Öl, ungesättigte Fettsäure oder eine Kombination davon umfasst.

8. Der Gegenstand nach einem vorhergehenden Anspruch, wobei die olefinische Verbindung Trimethylolpropantri(meth)acrylat, Bisphenol-A-ethoxylatdi(meth)acrylat, propoxyliertes Glycerintri(meth)acrylat, Trimethylolpropanethoxylattri(meth)acrylat, Di-(trimethylolpropantetra(meth)acrylat) oder eine Kombination davon umfasst.

9. Der Gegenstand nach einem vorhergehenden Anspruch, wobei die olefinische Verbindung ein Monomer umfasst.

10. Der Gegenstand nach einem vorhergehenden Anspruch, wobei die olefinische Verbindung ein Oligomer umfasst.

11. Der Gegenstand nach einem vorhergehenden Anspruch, wobei das PVC-Dispersionsharz Harzteilchen in einem flüssigen Weichmacher umfasst und wobei die Teilchen einen durchschnittlichen Teilchendurchmesser von 0,1 µm bis 1,5 µm aufweisen.

12. Der Gegenstand nach einem vorhergehenden Anspruch, wobei ein Latex enthaltender Primer oder ein Latex enthaltender Decküberzug über dem Beschichtungssystem aufgebracht wird und wobei das Zement-Faserplatten-Substrat in Form eines Verkleidungsprodukts vorliegt.

13. Der Gegenstand nach einem vorhergehenden Anspruch, wobei der beschichtete Gegenstand, wenn er strahlungsgehärtet ist, mindestens 30 Gefrier-Tau-Zyklen, geprüft gemäß ASTM D6944-03, Prüfverfahren A, standhalten kann.

14. Der Gegenstand nach Anspruch 13, wobei der beschichtete Gegenstand mindestens 175 Gefrier-Tau-Zyklen standhalten kann.

15. Der Gegenstand nach einem vorhergehenden Anspruch, wobei das Beschichtungssystem einen Gehalt an flüchtigen organischen Verbindungen, VOC, von weniger als 5%, bezogen auf das Gesamtgewicht des Beschichtungssystems, aufweist.

16. Der Gegenstand nach Anspruch 15, wobei das Beschichtungssystem einen Gehalt an flüchtigen organischen Verbindungen, VOC, von weniger als 0,5%, bezogen auf das Gesamtgewicht des Beschichtungssystems, aufweist.

17. Ein Verfahren zur Herstellung eines beschichteten Gegenstands, wobei das Verfahren umfasst:
Bereitstellen eines Zement-Faserplatten-Substrats;
Beschichten mindestens eines Teils des Substrats mit einem strahlungshärtbaren Beschichtungssystem, das eine oder mehrere olefinische Verbindungen und ein oder mehrere Polyvinylchlorid(PVC)-Dispersionsharze umfasst; und
Strahlungshärten der Beschichtung.

18. Das Verfahren nach Anspruch 17, umfassend das Beschichten des Substrats mit einer ersten Beschichtungszusammensetzung, die die eine oder mehrere olefinische Verbindungen umfasst, gefolgt von einer zweiten Beschichtungszusammensetzung, die ein oder mehrere Polyvinylchlorid(PVC)-Dispersionsharze umfasst.

## Revendications

1. Article enduit comprenant:
un substrat en panneau de fibre de ciment ; et
un système de revêtement durcissable par rayonnement appliqué sur le
substrat,
dans lequel le système de revêtement comprend :
un ou plusieurs composés oléfiniques ; et
une ou plusieurs résines de dispersion à base de chlorure de polyvinyle (PVC).

2. Article selon la revendication 1, dans lequel le système de revêtement comprend deux compositions de revêtement ou plus qui peuvent être appliquées en deux couches ou plus.

3. Article selon l'une quelconque des revendications précédentes, dans lequel le système de revêtement comprend en outre un système initiateur.

4. Article selon la revendication 3, dans lequel le système de revêtement comprend un photoinitiateur UV.

5. Article selon l'une quelconque des revendications précédentes, dans lequel le système de revêtement comprend une première composition comprenant un composé oléfinique et une seconde composition comprenant une résine de dispersion à base de PVC.

6. Article selon l'une quelconque des revendications précédentes, dans lequel le système de revêtement comprend une composition comprenant à la fois un composé oléfinique et une résine de dispersion à base de PVC.

7. Article selon l'une quelconque des revendications précédentes, dans lequel le composé oléfinique comprend un (méth)acrylate, un vinyle, un éther vinylique, un éther allylique, un ester vinylique, une huile insaturée, un acide gras insaturé ou une combinaison de ceux-ci.

8. Article selon l'une quelconque des revendications précédentes, dans lequel le composé oléfinique comprend le tri(méth)acrylate de triméthylolpropane, le di(méth)acrylate d'éthoxylate de bisphénol A, le tri(méth)acrylate de glycérol propoxylé, le tri(méth)acrylate d'éthoxylate de triméthylolpropane, le di(tétra(méth)acrylate de triméthylolpropane) ou une combinaison de ceux-ci.

9. Article selon l'une quelconque des revendications précédentes, dans lequel le composé oléfinique comprend un monomère.

10. Article selon l'une quelconque des revendications précédentes, dans lequel le composé oléfinique comprend un oligomère.

11. Article selon l'une quelconque des revendications précédentes, dans lequel la résine de dispersion à base de PVC comprend des particules de résine dans un plastifiant liquide, et dans lequel les particules ont un diamètre de particule moyen de 0,1 µm à 1,5 µm.

12. Article selon l'une quelconque des revendications précédentes, dans lequel une couche d'apprêt contenant du latex ou une couche de finition contenant du latex est appliquée sur le système de revêtement, et dans lequel le substrat en panneau de fibre de ciment est sous la forme d'un produit de parement.

13. Article selon l'une quelconque des revendications précédentes, dans lequel l'article enduit lorsqu'il est durci par rayonnement peut supporter au moins 30 cycles de gel-dégel, lorsque testé selon la norme ASTM D6944-03, Méthode de test A.

14. Article selon la revendication 13, dans lequel l'article enduit peut supporter au moins 175 cycles de gel-dégel.

15. Article selon l'une quelconque des revendications précédentes, dans lequel le système de revêtement a une teneur en COV (composés organiques volatils) inférieure à 5 % par rapport au poids total du système de revêtement.

16. Article selon la revendication 15, dans lequel le système de revêtement a une teneur en COV inférieure à 0,5 % par rapport au poids total du système de revêtement.

17. Procédé de préparation d'un article enduit, lequel procédé comprend les étapes consistant à :
fournir un substrat en panneau de fibre de ciment ;
revêtir au moins une partie du substrat avec un système de revêtement durcissable par rayonnement comprenant un ou plusieurs composés oléfiniques et une ou plusieurs résines de dispersion à base de chlorure de polyvinyle (PVC) ; et
durcir le revêtement par rayonnement.

18. Procédé selon la revendication 17, comprenant l'étape consistant à revêtir le substrat avec une première composition de revêtement comprenant le ou les composés oléfiniques puis avec une deuxième composition de revêtement comprenant une ou plusieurs résines de dispersion à base de chlorure de polyvinyle (PVC).
